# EUROPEAN PATENT APPLICATION

(11) **EP 4 539 148 A1**
(43) Date of publication of application: **16.04.2025**
(21) Application number: 23912846.5
(22) Date of filing: 26.12.2023
(51) Int. Cl.: H01M 4/134, H01M 4/62, H01M 4/38, H01M 4/587, H01M 4/48, H01M 4/36, H01M 4/131, H01M 4/133

(54) **ANODE COMPOSITION, METHOD FOR PREPARING SAME, ANODE SLURRY, ANODE, AND LITHIUM SECONDARY BATTERY**

(30) Priority: 26.12.2022 KR 20220184166; 22.12.2023 KR 20230189478
(71) Applicant: LG Energy Solution, Ltd., Seoul 07335 (KR)
(72) Inventor: KO, Minjin, Daejeon 34122 (KR); KWON, Yohan, Daejeon 34122 (KR); KIM, Young Jae, Daejeon 34122 (KR); PARK, Su Jin, Daejeon 34122 (KR); LEE, Sangmin, Daejeon 34122 (KR); LEE, Jaewook, Daejeon 34122 (KR)
(74) Representative: Hoffmann Eitle
(86) International application number: PCT/KR2023/021520
(87) International publication number: WO 2024/144171

(57) **Abstract**

A negative electrode composition is provided, including: a silicon-based active material; a conductive material; a binder; and a pH adjuster and having a pH of 5 or more and 7 or less, a negative electrode slurry including the same, a negative electrode, a lithium secondary battery, and a method for preparing the negative electrode composition.

The negative electrode composition provides an advantage of simultaneously solving the problems of silicon-based active materials while providing an advantage of achieving excellent adhesion strength by adjusting the pH of the entire negative electrode composition.

## Description

### [Technical Field]

This application claims priority to and the benefit of Korean Patent Application Nos. 10-2022-0184166 and 10-2023-0189478 filed in the Korean Intellectual Property Office on December 26, 2022 and December 22, 2023, respectively, the entire contents of which are incorporated herein by reference.[Technical Field]

The present disclosure relates to a negative electrode composition, a preparation method thereof, a negative electrode slurry, a negative electrode, and a lithium secondary battery.

### Background

Demands for the use of alternative energy or clean energy are increasing due to the rapid increase in the use of fossil fuels, and as a part of this trend, the most actively studied field is a field of electricity generation and electricity storage using electrochemical reactions.

Currently, representative examples of electrochemical devices using such electrochemical energy include secondary batteries, and the fields of use thereof are increasing more and more.

As the technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as electrodes for such high capacity lithium secondary batteries, studies have been actively conducted on methods for preparing high-density electrodes having higher energy densities per unit volume.

In general, a secondary battery is composed of a positive electrode, a negative electrode, an electrolyte, and a separator. The negative electrode can include a negative electrode active material for intercalating and deintercalating lithium ions from the positive electrode, and as the negative electrode active material, silicon-based particles having high discharge capacity may be used.

In particular, recently, in response to the demand for a high-density energy battery, studies have been actively conducted on methods for increasing capacity by using a silicon-based compound such as Si/C or SiOx, which has a 10-fold higher capacity than a graphite-based material, as a negative electrode active material. Although silicon-based compounds, which are high-capacity materials, provide advantages in terms of having large capacity as compared to graphite, which is used in the related art, a problem can arise in that hydrogen gas may be generated due to surface oxidation reactions during the preparation and storage of silicon-based compound-containing electrode compositions or slurries, which can lead to a risk of explosion and reduction in phase stability.

In order to address this problem, various methods have been discussed, but there is a limitation to its application in that it may degrade the performance of the battery, so there is still a limitation in the commercialization of negative electrodes containing silicon-based compounds.

Therefore, there is a need for additional research on a negative electrode composition which includes a silicon-based compound and simultaneously can reduce the generation of hydrogen gas from the silicon-based compound so as to ameliorate the above-described problem.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Detailed Description of the Invention]

### [Technical Problem]

In order to at least partly address the problem, the present disclosure has been made in an effort to provide a negative electrode composition in which the hydrogen ion concentration (pH) is adjusted by a pH adjuster, a preparation method thereof, a negative electrode slurry, a negative electrode, and a lithium secondary battery.

An exemplary embodiment of the present disclosure provides a negative electrode composition including: a negative electrode active material including a silicon-based active material; a conductive material; a binder; and a pH adjuster, and the negative electrode composition having a pH of 5 or more and 7 or less when measured at 25°C.

Another exemplary embodiment provides a negative electrode slurry including the negative electrode composition and a solvent.

Still another exemplary embodiment provides a negative electrode including: a negative electrode current collector layer; and a negative electrode active material layer in which the negative electrode slurry is applied on one surface or both surfaces of the negative electrode current collector layer.

Finally, provided is a lithium secondary battery including: a first electrode; a second electrode; a separator provided between the first electrode and the second electrode; and an electrolyte, in which any one of the first electrode or second electrode is the negative electrode.

The negative electrode composition according to an exemplary embodiment of the present disclosure provides an effect of preventing the generation of hydrogen gas due to surface oxidation reactions during the preparation or storage of the negative electrode composition and a negative electrode slurry including the same by adjusting the hydrogen ion concentration (pH) of the entire negative electrode composition. Thereby, the phase stability of the negative electrode composition and the negative electrode slurry including the same can be improved, and the risk of explosion due to the generation of hydrogen gas can be reduced.

By using the negative electrode composition according to another exemplary embodiment of the present disclosure, the process safety and stability of a negative electrode and a lithium secondary battery including the same can be secured in the future.

### [Brief Description of Drawings]

FIG. 1 is a photograph of a state after a certain period of time has passed after the negative electrode composition according to an exemplary embodiment of the present disclosure is stored in a pouch.
FIG. 2 is a photograph of a state after a certain period of time has passed after a negative electrode composition in the related art is stored in a pouch.

### [Detailed Description]

Prior to the description of the present disclosure, some terms will be first defined.

When one part "includes" one constituent element in the present disclosure, unless otherwise specifically described, this does not mean that another constituent element is excluded, but means that another constituent element may be further included.

In the present disclosure, 'p to q' means a range of 'p or more and q or less'.

In the present disclosure, the fact that a polymer includes a monomer as a monomer unit means that the monomer participates in a polymerization reaction, and thus is included as a repeating unit in the polymer. In the present disclosure, when the polymer includes a monomer, it is interpreted to be the same as when the polymer includes a monomer as a monomer unit.

In the present disclosure, the 'polymer' is understood to be used in a broad sense, including a copolymer, unless otherwise specified as a 'homopolymer'.

In the present disclosure, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present disclosure, the molecular weight means a weight average molecular weight unless otherwise described.

Hereinafter, aspects of the present disclosure will be described in detail with reference to drawings, such that a person with ordinary skill in the art to which the present disclosure pertains can easily carry out the present disclosure. However, the present disclosure can be implemented in various different forms, and is not limited to the following description.

### Negative electrode composition

An exemplary embodiment of the present disclosure is characterized by a negative electrode composition in which a negative electrode active material includes a silicon-based active material, and the pH of the negative electrode composition is controlled to 5 or more and 7 or less by including a pH adjuster.

The negative electrode composition according to the exemplary embodiment may prevent the generation of hydrogen gas from the negative electrode active material by adjusting the pH of the entire negative electrode composition through the pH adjuster, and may improve the stability when used in a negative electrode in the future.

Specifically, the negative electrode composition may prevent the oxidation of the negative electrode active material (particularly, silicon particles) in the negative electrode composition by controlling the overall pH in a range of 5 or more and 7 or less using a pH adjuster.

In an exemplary embodiment of the present disclosure, the pH adjuster may include one or more selected from the group consisting of fumaric acid, glutaric acid, oxalic acid, malonic acid, succinic acid, maleic acid, palmitic acid, tartaric acid, formic acid, acetic acid, glycolic acid, sulfuric acid, hydrochloric acid, phosphoric acid, nitric acid, sulfonic acid, aminosulfonic acid, lithium hydroxide, and sodium hydroxide, but is not limited thereto as long as it can easily achieve a desired range of hydrogen ion concentration.

In an exemplary embodiment of the present disclosure, the pH adjuster may be used alone or in combination of two or more different materials.

In an exemplary embodiment of the present disclosure, the negative electrode active material may be present in an amount of 60 parts by weight or more based on 100 parts by weight of the negative electrode composition.

In another exemplary embodiment of the present disclosure, the negative electrode active material may be present in an amount of 60 parts by weight or more, preferably 65 parts by weight or more, more preferably 70 parts by weight or more, and 95 parts by weight or less, preferably 90 parts by weight or less, based on 100 parts by weight of the negative electrode composition.

In an exemplary embodiment of the present disclosure, the negative electrode active material may include one or more selected from the group consisting of a silicon-based active material and a carbon-based active material.

In an exemplary embodiment of the present disclosure, the negative electrode active material may be composed of a silicon-based active material and a carbon-based active material.

According to aspects of the present disclosure, the silicon-based active material has a 10-fold higher capacity than the carbon-based active material, and accordingly, when the silicon-based active material is applied to a negative electrode, it is possible to implement a negative electrode with a higher level of energy density even with a reduced thickness than when the carbon-based active material is used alone.

In another exemplary embodiment of the present disclosure, when the negative electrode active material is composed of a silicon-based active material and a carbon-based active material, the composition ratio between the silicon-based active material and the carbon-based active material may be in a range of 2 : 98 to 30 : 70.

The negative electrode active material according to the exemplary embodiment includes a carbon-based active material as a main component, and thus may further provide an effect in which swelling slightly occurs due to the small volume expansion of the active material during charging and discharging and the conductive connectivity of the negative electrode is excellent.

In an exemplary embodiment of the present disclosure, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In an exemplary embodiment of the present disclosure, for the silicon-based active material, only pure silicon (Si) may be used as the silicon-based active material. The use of pure silicon (Si) as the silicon-based active material may mean that based on the total of 100 parts by weight of the silicon-based active material as described above, pure Si particles (SiOx (x=0)), which are not bound to other particles or elements, are included in the above range.

In another exemplary embodiment, the silicon-based active material may include the SiOx (x=0) in an amount of 70 parts by weight or more, preferably 80 parts by weight or more, and more preferably 90 parts by weight or more, or 100 parts by weight or less, preferably 99 parts by weight or less, and more preferably 95 parts by weight or less, based on 100 parts by weight of the silicon-based active material.

According to aspects of the present disclosure, despite a large amount of silicon-based active material, the negative electrode composition including the silicon-based active material in the above content range mya hve significance in that by adjusting the pH of the negative electrode composition using a pH adjuster, the generation amount of hydrogen gas caused by the silicon-based active material is remarkably small.

In still another exemplary embodiment of the present disclosure, the conductive material and the binder, which are included in the negative electrode composition, are all for the negative electrode composition, and may be referred to as the negative electrode conductive material, and the negative electrode binder, respectively.

The negative electrode composition according to the exemplary embodiment can have a characteristic in which by using the silicon-based active material in the above range and using a specific conductive material and a specific binder, which can suppress the volume expansion rate in the charging and discharging process, the performance of the negative electrode does not deteriorate and output characteristics at charging and discharging are excellent even though the silicon-based active material is used in an amount in the above range.

In an exemplary embodiment of the present disclosure, the silicon-based active material may include one or more selected from the group consisting of SiOx (x=0), SiOx (0<x<2), SiC, and a Si alloy.

According to aspects of the present disclosure, the silicon-based active material may be present, for example, in a crystalline or amorphous form. Specifically, the silicon particles of the silicon-based active material may be preferably spherical particles, but are not limited thereto.

According to aspects of the present disclosure, in the case of SiO₂ where x is 2 in the SiOx is not included, but this SiO₂ does not react with lithium ions, and thus cannot store lithium. Therefore, it is preferred that x falls within the range of the exemplary embodiment.

According to aspects of the present disclosure, the silicon-based active material may be Si/C composed of a composite of Si and C, or Si.

According to aspects of the present disclosure, two or more of the silicon-based active materials may be used in mixture.

In an exemplary embodiment of the present disclosure, the carbon-based active material may include one or more selected from the group consisting of artificial graphite, natural graphite, hard carbon, and soft carbon.

In an exemplary embodiment of the present disclosure, the conductive material may be present in an amount of 0.03 parts by weight or more and 40 parts by weight or less based on 100 parts by weight of the negative electrode composition.

In another exemplary embodiment of the present disclosure, the conductive material may be included in an amount of 0.03 parts by weight or more and 40 parts by weight or less, preferably 0.05 parts by weight or more and 30 parts by weight or less, and more preferably 0.5 parts by weight or more and 25 parts by weight or less, based on 100 parts by weight of the negative electrode composition.

In an exemplary embodiment of the present disclosure, the conductive material may include one or more selected from the group consisting of a dotted conductive material; a planar conductive material; and a linear conductive material.

In an exemplary embodiment of the present disclosure, the conductive material may include a dotted conductive material and a linear conductive material.

According to aspects of the present disclosure, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black and/or artificial graphite in terms of implementing high conductivity and being excellent in dispersibility.

According to aspects of the present disclosure, the planar conductive material may increase the surface contact between silicon particles in the negative electrode to improve conductivity and simultaneously suppress the disconnection of the conductive path due to the volume expansion. The planar conductive material may be expressed as a plate-like conductive material or a bulk conductive material. Examples of the planar conductive material may include at least one selected from the group consisting of plate-like graphite, graphene, graphene oxide, and graphite flake, and may be preferably plate-like graphite.

According to aspects of the present disclosure, the linear conductive material may be carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has an sp² bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In another exemplary embodiment of the present disclosure, the conductive material may be a negative electrode conductive material.

According to aspects of the present disclosure, the negative electrode conductive material is applied to the negative electrode, and has a completely different configuration from a positive electrode conductive material applied to the positive electrode. That is, according to certain aspects, the negative electrode conductive material serves to capture a contact point between silicon-based active materials in which the volume expansion of the negative electrode is very large due to charging and discharging, whereas the positive electrode conductive material serves to impart partial conductivity while playing a buffer role as a cushioning role when roll-pressed, so that the negative electrode conductive material and the positive electrode conductive material have different structures and roles.

In an exemplary embodiment of the present disclosure, the binder may be present in an amount of 2 parts by weight or more and 30 parts by weight or less based on 100 parts by weight of the negative electrode composition.

In another exemplary embodiment of the present disclosure, the binder may be included in an amount of 30 parts by weight or less, preferably 25 parts by weight or less, and more preferably 20 parts by weight or less, or may be included in an amount of 2 parts by weight or more, 5 parts by weight or more, and 10 parts by weight or more, based on 100 parts by weight of the negative electrode composition.

In still another exemplary embodiment of the present disclosure, the binder may be a negative electrode binder.

In an exemplary embodiment of the present disclosure, the binder may have a weight average molecular weight of 100,000 g/mol or more and 1,500,000 g/mol or less.

According to certain exemplary embodiments, mechanical strength may be excellent because the weight average molecular weight of the binder satisfies the above-described range, and the adhesion strength of the binder may be excellent because the interaction between molecules is high. Furthermore, when the above range is satisfied, according to certain aspects, the viscosity of the binder may be selected within an appropriate range, so that when a negative electrode is manufactured using the binder, the coatability is excellent.

In an exemplary embodiment of the present disclosure, the binder is a water-based binder, and the water-based binder may include one or more selected from the group consisting of a carboxymethyl cellulose-based binder including a polymer resin having at least one carboxylic group and derivatives thereof, a polyacrylic acid (PAA)-based binder, a polyvinyl alcohol (PVA)-based binder, a polyacrylonitrile (PAN)-based binder, and a polyacryl amide (PAM)-based binder.

In another exemplary embodiment of the present disclosure, the water-based binder may be a polymer including one or more monomers selected from the group consisting of (meth)acrylamide, (meth)acrylic acid and (meth)acrylonitrile.

According to aspects of the present disclosure, a polymerization initiator is used to prepare the binder, and ammonium persulfate may be used as an example of the polymerization initiator, but the polymerization initiator is not limited thereto.

According to aspects of the present disclosure, when the binder includes a plurality of compounds having a specific ratio (represented by parts by weight or weight ratio), it may mean that each compound (for example: acrylamide, acrylic acid, and acrylonitrile) is included as a monomer in the binder polymer.

According to aspects of the present disclosure, the binder includes a plurality of compounds as monomers, and the monomer containing the largest content is regarded as a representative, and thus, may be named a "monomer"-based compound.

According to aspects of the present disclosure, the term "(meth)acrylic" may mean methacrylic and/or acrylic.

According to aspects of the present disclosure, when two or more of the binder materials are used to prepare a copolymer having two or more monomers, the proportion of each monomer is not particularly limited as long as it belongs to the water-based binder.

### Negative electrode slurry

An exemplary embodiment of the present disclosure provides a negative electrode slurry including the above-described negative electrode composition and a solvent.

In another exemplary embodiment of the present disclosure, the solvent may include those known in the art. For example, the solvent may be water (for example: distilled water) or N-methyl-2-pyrrolidinone (NMP), but is not limited thereto.

In some cases, the viscosity of the negative electrode slurry may be controlled within an appropriate range by appropriately adjusting the average particle diameter (D50) of the silicon-based active material or the specific surface area of the particles. When the viscosity of the negative electrode slurry is controlled within an appropriate range, the dispersion of constituent components (for example; a conductive material, a binder, a silicon-based active material, a carbon-based active material, and the like) in the slurry may be improved. Accordingly, the contact area between the constituent components may be improved, so that the conductive network may be maintained, the capacity retention rate may be increased, and the current density non-uniformity phenomenon during charging/discharging may also be prevented.

In some cases, the viscosity of the negative electrode slurry may be adjusted so as to be 5000 cps to 6000 cps. According to certain aspects, when the above viscosity range is satisfied, storability is excellent, and when one surface or both sides of the electrode current collector layer is or are coated with the negative electrode slurry in the future, coatability is excellent.

### Negative electrode

An exemplary embodiment of the present disclosure provides a negative electrode including: a negative electrode current collector layer; and a negative electrode active material layer in which the negative electrode slurry is applied on one surface or both surfaces of the negative electrode current collector layer.

According to aspects of the present disclosure, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

Another exemplary embodiment of the present disclosure provides a negative electrode for a lithium secondary battery, in which the negative electrode current collector layer has a thickness of 1 µm or more and 100 µm or less, and the negative electrode active material layer has a thickness of 20 µm or more and 500 µm or less.

However, the thickness may be variously modified depending on the type and use of the negative electrode used, and is not limited thereto.

### Lithium Secondary Battery

An exemplary embodiment of the present disclosure provides a lithium secondary battery including: a first electrode; a second electrode; a separator provided between the first electrode and the second electrode; and an electrolyte, in which any one of the first electrode or the second electrode is the above-described negative electrode.

Specifically, the first electrode may be the above-described electrode and the second electrode may be a positive electrode, or the first electrode may be a positive electrode and the second electrode may be the above-described negative electrode.

According to aspects of the present disclosure, a known positive electrode material may be used as the positive electrode as long as it does not deviate from the scope of the present disclosure.

Specifically, the lithium secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 µm to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material can include: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

According to certain aspectse, the positive electrode conductive material is used to impart conductivity to the positive electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, according to certain aspects, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as **N-**methyl-2-pyrrolidinone (NMP), propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻ , PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present disclosure provides a battery module including the lithium secondary battery as a unit cell, and a battery pack including the same. The battery module and the battery pack include the lithium secondary battery which can exhibit high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

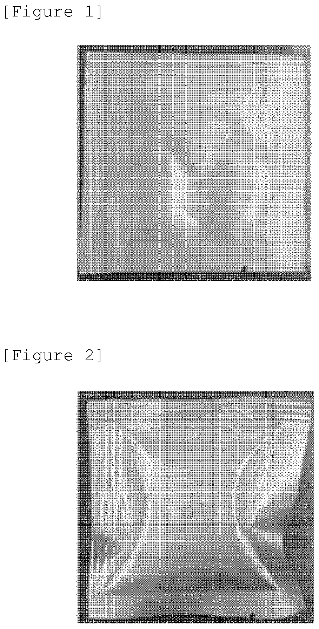

FIG. 1 is a photograph of a state after a certain period of time has passed after storage in a pouch for a battery including the negative electrode composition according to an exemplary embodiment of the present disclosure, and FIG. 2 is a photograph of a state after a certain period of time has passed after storage in a pouch for a battery including an electrode composition in the related art. Although FIGS. 1 and 2 are the same in that both are stored for a certain period of time (about 24 hours) under high temperature conditions (about 60°C), it can be confirmed that in FIG. 1, there is almost no expansion due to a small amount of hydrogen gas generated, and in FIG. 2, the expansion is severe due to a large amount of hydrogen gas generated.

### Method for preparing negative electrode composition

An exemplary embodiment of the present disclosure provides a method for preparing a negative electrode composition, the method including mixing a silicon-based active material; a conductive material; a binder; and a pH adjuster, and the pH of the negative electrode composition may be adjusted to 5 or more and 7 or less during the mixing step using the pH adjuster, or the pH of the negative electrode composition may be adjusted to 5 or more and 7 or less after the mixing step is completed (for example, when a homogeneous mixture is achieved).

According to aspects of the present disclosure, the silicon-based active material; conductive material; binder; and pH adjuster are the same as described above.

### Method for manufacturing lithium secondary battery

An exemplary embodiment of the present disclosure provides a method for manufacturing a lithium secondary battery, the method including: preparing a negative electrode slurry by mixing the negative electrode composition with a solvent; applying the negative electrode slurry on one surface or both surfaces of the electrode current collector layer; and drying the electrode current collector layer to which the negative electrode slurry is applied, and the negative electrode composition, the solvent, the negative electrode current collector layer, and the application are the same as described above.

According to aspects of the present disclosure, as the drying process, a method known in the art, such as air drying, may be used.

According to aspects of the present disclosure, steps known in the art such as rolling may be applied after the above steps.

Hereinafter, preferred embodiments will be suggested to facilitate understanding of the present disclosure, but the embodiments are only provided to illustrate the present disclosure, and it is apparent to those skilled in the art that various alterations and modifications are possible within the scope and technical spirit of the present disclosure, and it is natural that such alterations and modifications also fall within the accompanying claims.

### Preparation Examples. Preparation of water-based binder

### Preparation Example 1

In a reactor equipped with a stirrer, a thermometer, a reflux condenser, and a nitrogen gas inflow tube, acrylamide (50% aqueous solution) and acrylic acid (AA, 80% aqueous solution) were used and mixed at a molar ratio of 6:4, the resulting mixture was reacted at 80°C for 5 hours to prepare a water-based polymer (a polyacrylamide polymer, in an aqueous solution state).

Thereafter, a 0.1 molar (M) aqueous solution of NaOH was added dropwise to the water-based polymer to prepare a water-based binder with pH = 7.8.

### Examples. Preparation of negative electrode slurry

### Example 1

Si with d50 = 5.2 µm was used as a negative electrode active material, three types of conductive materials: carbon black (product name: Super C65 manufactured by TIMCAL Ltd.), artificial graphite (product name: SFG6L manufactured by TIMCAL Ltd.), and single-walled carbon nanotubes (SWCNT) were used as conductive materials, the water-based binder prepared in Preparation Example 1 was used as a binder, and the resulting mixture was mixed so as to have Si : C65 : SFG6L : SWCNT : the binder = 80 : 3 : 8.5 : 0.5 : 8 (based on weight ratio), thereby preparing a negative electrode composition. Here, 1 M oxalic acid (pH adjuster) was added thereto, such that the final pH of the electrode composition was 5.2.

Thereafter, water was added as a solvent, and the content of water was adjusted in consideration of coatability, viscosity, and solid content, such that the viscosity of the obtained negative electrode slurry was 5000 cps to 6000 cps.

### Example 2

Si with d50 = 5.2 µm was used as a negative electrode active material, three types of conductive materials: carbon black (product name: Super C65 manufactured by TIMCAL Ltd.), artificial graphite (product name: SFG6L manufactured by TIMCAL Ltd.), and SWCNT were used as conductive materials, the water-based binder prepared in Preparation Example 1 was used, and the resulting mixture was mixed so as to have Si : C65 : SFG6L : SWCNT : the binder = 80 : 3 : 8.5 : 0.5 : 8 (based on weight ratio), thereby preparing a negative electrode composition. Here, 0.0001 M sulfuric acid (pH adjuster) was added thereto, such that the final pH of the electrode composition was 5.5.

Thereafter, water was added as a solvent, and the content of water was adjusted in consideration of coatability, viscosity, and solid content. The viscosity of the obtained negative electrode slurry was adjusted to 5000 cps to 6000 cps.

### Example 3

A negative electrode slurry was prepared in the same manner as in Example 1, except that a mixture of artificial graphite (QCG-N2, manufactured by Shanshan Technology) : Si = 90 : 10 was used as the negative electrode active material.

### Example 4

A negative electrode slurry was prepared in the same manner as in Example 1, except that a mixture of artificial graphite (SD5100A, manufactured by Sila Nanotechnologies Inc.) : SiC = 90 : 10 was used as the negative electrode active material.

### Comparative Example 1

Si with d50 = 5.2 µm was used as a negative electrode active material, three types of conductive materials: carbon black (product name: Super C65 manufactured by TIMCAL Ltd.), artificial graphite (product name: SFG6L manufactured by TIMCAL Ltd.), and SWCNT were used as conductive materials, the water-based binder prepared in Preparation Example 1 was used as a binder, and the resulting mixture was mixed so as to have Si : C65 : SFG6L : SWCNT : the binder = 80 : 3 : 8.5 : 0.5 : 8 (based on weight ratio), thereby preparing a negative electrode composition.

Thereafter, water was added as a solvent, and the content of water was adjusted in consideration of coatability, viscosity, and solid content, such that the viscosity of the obtained negative electrode slurry fell within a range of 5000 cps to 6000 cps. (provided that the pH of the electrode composition state = 7.4)

### Comparative Example 2

A negative electrode slurry was prepared in the same manner as in Comparative Example 1, except that a mixture of artificial graphite (QCG-N2, manufactured by Shanshan Technology) : Si = 90 : 10 was used as the negative electrode active material. (provided that the pH of the electrode composition state = 7.6)

### Comparative Example 3

A negative electrode slurry was prepared in the same manner as in Comparative Example 1, except that a mixture of artificial graphite : SiC = 90 : 10 was used as the negative electrode active material. (provided that the pH of the electrode composition state = 7.5)

### Comparative Example 4

A negative electrode slurry was prepared in the same manner as in Comparative Example 1, except that in Comparative Example 1, 0.0001 M nitric acid was additionally added such that the final pH of the electrode composition was 4.2.

### Comparative Example 5

A negative electrode slurry was prepared in the same manner as in Comparative Example 1, except that in Comparative Example 1, 100% natural graphite was used.

### Experimental Examples.

### Experimental Example 1: Evaluation of amount of hydrogen gas generated

The amount of hydrogen gas generated was measured by storing the negative electrode slurries of Examples 1 to 4 and Comparative Examples 1 to 5 at a temperature of 60°C overnight.

Specifically, the amount of hydrogen gas generated may be specifically obtained by each putting 5 g of a negative electrode slurry into a pouch with a size of 9 cm x 9 cm, sealing the pouch, and then leaving the pouch to stand in a constant temperature chamber at 60°C for 24 hours, and capturing the gas generated in the pouch for quantitative analysis with GC/MS.

### Experiment Example 2: Battery manufacturing and battery characteristic evaluation

A copper foil with a thickness of 18 µm was coated with each of the negative electrode slurries of Examples 1 to 4 and Comparative Examples 1 to 5 and dried, an active material layer with a thickness of 50 µm was formed on one surface of the copper foil, and the copper foil was punched into circular shapes with a diameter of 14 Φ (mm) to manufacture a test electrode (negative electrode). A metal lithium foil with a thickness of 0.3 mm was used as a positive electrode. A porous polyethylene sheet with a thickness of 0.1 mm was used as a separator. In addition, an electrolytic solution in which LiPF₆ as a lithium salt was dissolved at a concentration of about 1 mol/L in a mixed solvent of ethylene carbonate (EC) and diethyl carbonate (DEC) at a volume ratio of 1 : 1 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container. The coin cell was charged with a constant current of 0.05 C until the voltage reached 0.01 V, and discharged with a constant current of 0.05 C until the voltage reached 1.0 V to determine the initial (discharge) capacity, and thereafter, a capacity retention rate test was performed in the same voltage range as above at a constant current of 0.2 C for the cycle characteristics, and the results are shown in the following Table 1.

**[Table 1]**

| Experiment Content | Example 1 | Example 2 | Example 3 | Example 4 | Comparative Example 1 | Comparative Example 2 | Comparative Example 3 | Comparative Example 4 | Comparative Example 5 | Remarks |
|---|---|---|---|---|---|---|---|---|---|---|
| H₂ gas generation amount (µL) | 120 | 150 | 62 | 95 | 86,200 | 28,000 | 38,000 | 42 | 5 | |
| Capacity retention rate (%) | 86 | 83 | 80 | 85 | 84 | 81 | 84 | 55 | 91 | 30 cycles |
| Initial capacity (mAh/g) | 3450 | 3470 | 680 | 480 | 3300 | 630 | 460 | 3460 | 370 | |

As described in Table 1 above, it can be seen that in the batteries (Examples 1 to 4) using a negative electrode slurry in which the pH of the electrode composition satisfies a range of 5 to 7 using a pH adjuster, the amount of hydrogen gas generated is small and simultaneously, the cycle capacity retention rate is excellent compared to Comparative Examples 1 to 4.

Specifically, in the case of Comparative Example 4 in which the pH of the electrode composition was less than 5, the amount of hydrogen gas generated was low, but the capacity retention rate was very low even though Si was used as the negative electrode active material. Further, it can be seen that Comparative Examples 1 to 3 in which the pH of the binder exceeds 7 are not suitable as negative electrode compositions in that the amount of hydrogen gas generated is 28,000 µL or more even though the capacity retention rate is high at 80% or more.

In addition, Comparative Example 5 is not suitable for the manufacture of a high-capacity battery, and thus is determined as inappropriate because the negative electrode active material is composed of graphite, the capacity retention rate and amount of hydrogen gas generated are good, but the initial capacity is less than 400 mAh/g.

## Claims

1. A negative electrode composition comprising:
a negative electrode active material comprising a silicon-based active material;
a conductive material;
a binder; and
a pH adjuster,
wherein a pH of the composition is 5 or more and 7 or less when measured at 25°C.

2. The negative electrode composition of claim 1, wherein the pH adjuster comprises one or more selected from the group consisting of fumaric acid, glutaric acid, oxalic acid, malonic acid, succinic acid, maleic acid, palmitic acid, tartaric acid, formic acid, acetic acid, glycolic acid, sulfuric acid, hydrochloric acid, phosphoric acid, nitric acid, sulfonic acid, aminosulfonic acid, lithium hydroxide, and sodium hydroxide.

3. The negative electrode composition of claim 1, wherein the negative electrode active material is present in an amount of 60 parts by weight or more based on 100 parts by weight of the negative electrode composition.

4. The negative electrode composition of claim 1, wherein the negative electrode active material further comprises a carbon-based active material.

5. The negative electrode composition of claim 1, wherein the silicon-based active material comprises one or more selected from the group consisting of SiOx, wherein x=0, SiOx, wherein 0<x<2, SiC, and a Si alloy.

6. The negative electrode composition of claim 1, wherein the silicon-based active material comprises one or more selected from the group consisting of SiOx (x=0) and SiOx (0<x<2), and comprises 70 parts by weight or more of the SiOx (x=0) based on 100 parts by weight of the silicon-based active material.

7. The negative electrode composition of claim 4, wherein the carbon-based active material comprises one or more selected from the group consisting of artificial graphite, natural graphite, hard carbon, and soft carbon.

8. The negative electrode composition of claim 1, wherein the conductive material comprises one or more selected from the group consisting of a dotted conductive material, a planar conductive material, and a linear conductive material.

9. The negative electrode composition of claim 1, wherein the binder is a water-based binder, and
the water-based binder comprises one or more selected from the group consisting of a carboxymethyl cellulose-based binder comprising a polymer resin having at least one carboxylic group and derivatives thereof, a polyacrylic acid (PAA)-based binder, a polyvinyl alcohol (PVA)-based binder, a polyacrylonitrile (PAN)-based binder, and a polyacryl amide (PAM)-based binder.

10. A negative electrode slurry comprising the negative electrode composition according to claim 1 and a solvent.

11. A negative electrode comprising:
a negative electrode current collector layer; and
a negative electrode active material layer in which the negative electrode slurry according to claim 10 is applied on one surface or both surfaces of the negative electrode current collector layer.

12. A lithium secondary battery comprising:
a first electrode;
a second electrode;
a separator provided between the first electrode and the second electrode; and
an electrolyte,
wherein any one of the first electrode or the second electrode is the negative electrode according to claim 11.
